# EUROPEAN PATENT APPLICATION

(11) **EP 4 571 592 A1**
(43) Date of publication of application: **18.06.2025**
(21) Application number: 23914904.0
(22) Date of filing: 27.09.2023
(51) Int. Cl.: G06N 3/098

(54) **ELECTRONIC APPARATUS AND CONTROL METHOD THEREOF**

(30) Priority: 03.01.2023 KR 20230000664
(71) Applicant: Samsung Electronics Co., Ltd., Suwon-si, Gyeonggi-do 16677 (KR)
(72) Inventor: KIM, Taejeoung, Suwon-si Gyeonggi-do 16677 (KR)
(74) Representative: Gulde & Partner
(86) International application number: PCT/KR2023/015139
(87) International publication number: WO 2024/147440

(57) **Abstract**

An electronic apparatus, including: a communication interface; a memory configured to store at least one instruction; and at least one processor configured to: receive information regarding a global neural network model and information regarding evaluation data from a server using the communication interface; obtain a data set for training the global neural network model; train the global neural network model based on the data set; evaluate the trained global neural network model by inputting the evaluation data to the trained global neural network model; and determine whether to transmit information regarding the trained global neural network model to the server based on a result of the evaluating.

## Description

### [TECHNICAL FIELD]

This disclosure relates to an electronic apparatus and a controlling method thereof, and more particularly to an electronic apparatus capable of performing federated learning on a neural network model in association with a server and a controlling method thereof

### [BACKGROUND ART]

Techniques for training a neural network model may include a technique for training a neural network model in one electronic apparatus, and also a federated learning technique in which a server and a plurality of apparatuses work together to train a neural network model.

Federated learning may refer to a technology in which a plurality of local electronic apparatuses and a central server cooperate to train a global model in a decentralized data situation. Here, the local electronic apparatuses may include an Internet of Things (IoT) device, a smartphone, and the like.

Federated learning can may provide advantages such as improved data privacy and communication efficiency. Using federated learning may allow learning without data leakage in situations in which personal information of a patient, such as hospital clinical data, must be protected. In addition, when all data corresponding to tens of thousands of local electronic apparatuses is transmitted to a central server, network traffic and storage costs may increase. However, when federated learning is used, network costs may be significantly reduced because only update information of the neural network model may be exchanged.

However, in some approaches to federated learning, there may be a problem of low stability due to failure and attack on global model learning. Specifically, in the process of transmitting a global model, the accuracy of the global model may be damaged by modifying parameters of the global model. In addition, the local neural network model generated by the electronic apparatus may be damaged because the learning data may be damaged prior to learning, and information regarding the neural network model learned in the electronic apparatus may be damaged when the information regarding the neural network model (e.g., parameters) is transmitted to the central server. This may lead to the problem of compromised accuracy of the global neural network model. In addition, when the central server evaluates the learned neural network model, the accuracy of the federated learning may be reduced due to damage to the evaluation data.

Therefore, there is a need for a method of maintaining the accuracy of the neural network model according to the federated learning while minimizing damage to the neural network model due to failure and attack of the global model learning.

### [DISCLOSURE]

### [TECHNICAL SOLUTION]

In accordance with an aspect of the disclosure, an electronic apparatus includes: a communication interface; a memory configured to store at least one instruction; and at least one processor configured to: receive information regarding a global neural network model and information regarding evaluation data from a server using the communication interface; obtain a data set for training the global neural network model; train the global neural network model based on the data set; evaluate the trained global neural network model by inputting the evaluation data to the trained global neural network model; and determine whether to transmit information regarding the trained global neural network model to the server based on a result of the evaluating.

The at least one processor may be further configured to: obtain a first accuracy level regarding a result value output by inputting the evaluation data to the global neural network model; obtain a second accuracy level regarding a result value output by inputting the evaluation data to the trained global neural network model; and evaluate the trained global neural network model by comparing the first accuracy level with the second accuracy level.

The at least one processor may be further configured to, based on determining that the second accuracy level is higher than the first accuracy level, determine whether to transmit the information regarding the trained global neural network model to the server.

The information regarding the global neural network model may include version information corresponding to the global neural network model and address information indicating an address from which the global neural network model is downloadable; and the at least one processor may be further configured to: compare version information corresponding to a local neural network model stored in the electronic apparatus with the version information corresponding to the global neural network model; and based on determining that a version of the global neural network model is higher than a version of the local neural network model, download the global neural network model using the communication interface based on the address information.

The at least one processor may be further configured to: receive a version file including the information regarding the global neural network model and the information regarding the evaluation data from the server using the communication interface; obtain address information regarding a data set pre-stored in the electronic apparatus; and add the obtained address information regarding the data set to the version file.

The at least one processor may be further configured to: update the version file to include parameter information regarding the trained global network model based on the result of the evaluating; and control the communication interface to transmit the updated version file to the server.

The at least one processor may be further configured to control the communication interface to delete the address information regarding the data set from the updated version file before the updated version file is transmitted to the server.

A new version of the global neural network model may be generated by the server based on the information regarding the trained global neural network model received from the electronic apparatus.

The at least one processor may be further configured to: perform Secured Sockets Layer/Transport Layer Security (SSL/TLS) encoding on the information regarding the trained global neural network model; and control the communication interface to transmit the encoded trained global neural network model to the server.

The at least one processor may be further configured to store the trained global neural network model in the memory as a local neural network model.

In accordance with an aspect of the disclosure, a controlling method of an electronic apparatus includes: receiving information regarding a global neural network model and information regarding evaluation data from a server; obtaining a data set for training the global neural network model; training the global neural network model based on the data set; evaluating the trained global neural network model by inputting the evaluation data to the trained global neural network model; and determining whether to transmit information regarding the trained global neural network model to the server based on a result of the evaluating.

The evaluating may include: obtaining a first accuracy level regarding a result value output by inputting the evaluation data to the global neural network model; obtaining a second accuracy level regarding a result value output by inputting the evaluation data to the trained global neural network model; and evaluating the trained global neural network model by comparing the first accuracy level with the second accuracy level.

The determining may include: based on determining that the second accuracy level is higher than the first accuracy level, determining whether to transmit the information regarding the trained global neural network model to the server.

The information regarding the global neural network model may include version information corresponding to the global neural network model and address information indicating an address from which the global neural network model is downloadable; and the controlling method may include: comparing version information corresponding to a local neural network model stored in the electronic apparatus with the version information corresponding to the global neural network model; and based on determining that a version of the global neural network model is higher than a version of the local neural network model, downloading the global neural network model based on the address information.

The receiving may include: receiving a version file including the information regarding the global neural network model and the information regarding the evaluation data from the server; and the obtaining may include: obtaining address information regarding a data set pre-stored in the electronic apparatus; and adding the obtained address information regarding the data set to the version file.

### [DESCRIPTION OF DRAWINGS]

FIG. 1 is a view provided to explain a method in which an electronic apparatus performs federated learning on a neural network model in association with a server according to one or more embodiments;
FIG. 2 is a block diagram illustrating configuration of an electronic apparatus according to one or more embodiments;
FIG. 3 is a block diagram including configuration of an electronic apparatus and a server for performing federated learning according to one or more embodiments;
FIG. 4 is a flowchart provided to explain a controlling method of an electronic apparatus that performs federated learning using a version file according to one or more embodiments;
FIG. 5 is a view provided to explain a version file according to one or more embodiments;
FIGS. 6 to 9 are views provided to explain a version file while an electronic apparatus performs learning on a neural network model according to one or more embodiments;
FIG. 10 is a flowchart provided to explain a controlling method of a server that performs federated learning using a version file according to one or more embodiments.
FIG. 11 is a flowchart provided to explain a method of determining whether to use a global model learned based on a version of a trained global model according to one or more embodiments;
FIG. 12 is a view provided to explain a version file of a new version of a global network model according to one or more embodiments; and
FIG. 13 is a flowchart provided to explain a controlling method of an electronic apparatus according to one or more embodiments.

### [MODE FOR INVENTION]

Hereinafter, various embodiments of the present disclosure will be described. However, the present disclosure is not intended to be limited to the specific described embodiments, and should be understood to include various modifications, equivalents and/or alternatives.

In the disclosure, an expression "have," "may have," "include," "may include," or the like, indicates existence of a corresponding feature (for example, a numerical value, a function, an operation, a component such as a part, or the like), and does not exclude existence of an additional feature.

In the disclosure, an expression "A or B," at least one of "A or/and B," "one or more of A and/or B," or the like, may include all possible combinations of items enumerated together. For example, "A or B," "at least one of A and B," or "at least one of A or B" may indicate all of 1) a case in which at least one A is included, 2) a case in which at least one B is included, or 3) a case in which both of at least one A and at least one B are included.

Expressions "first", "second", "1st," "2nd," or the like, used in the disclosure may indicate various components regardless of a sequence and/or importance of the components, will be used only in order to distinguish one component from the other components, and do not limit the corresponding components. For example, a first user device and a second user device may indicate different user devices regardless of a sequence or importance. For example, without departing from the scope of rights described in this document, a first element may be referred to as a second element and similarly, the second element may also be referred to as the first element.

In this document, a "module", a "unit", a "part", and the like may be used herein to refer to components that perform at least one function or operation, and such components may be implemented by hardware or software or by a combination of hardware and software. In addition, a plurality of "modules", a plurality of "units", a plurality of "parts", and the like may be integrated in at least one module or chip and be implemented by a processor except when each of "modules", "units", "parts", and the like needs to be implemented by specific hardware.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component). On the other hand, when it is mentioned that any component (for example, a first component) is "directly coupled" or "directly connected" to another component (for example, a second component), it is to be understood that the other component (for example, a third component) is not present between any component and another component.

An expression "configured (or set) to" used in the disclosure may be replaced by an expression, for example, "suitable for," "having the capacity to," "designed to," "adapted to," "made to," or "capable of" depending on a situation. A term "configured (or set) to" may not necessarily mean "specifically designed to" in hardware. Instead, an expression "an apparatus configured to" may mean that the apparatus "is capable of" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory apparatus.

Terms used in this disclosure are only used to describe a specific embodiment, and may not be intended to limit the scope of other embodiments. Singular expressions may include plural expressions unless the context clearly indicates otherwise. Terms used herein, including technical or scientific terms, may have the same meaning as the terms commonly understood by those skilled in the art. Among the terms used in this disclosure, terms defined in general dictionaries may be interpreted as having the same or similar meanings as those in the context of the related art, and unless explicitly defined in this disclosure, they are not interpreted ideally or excessively. In some cases, even terms defined in this disclosure cannot be interpreted to exclude the embodiments of this disclosure.

Hereinafter, embodiments are described in greater detail with reference to the drawings. However, in the description below, if it is determined that a detailed description of a related known function or configuration may unnecessarily obscure the present disclosure, the detailed description thereof may be omitted. In connection with the description of the drawings, like reference numerals may be used for like components.

Hereinafter, embodiments are described in detail with reference to the drawings.

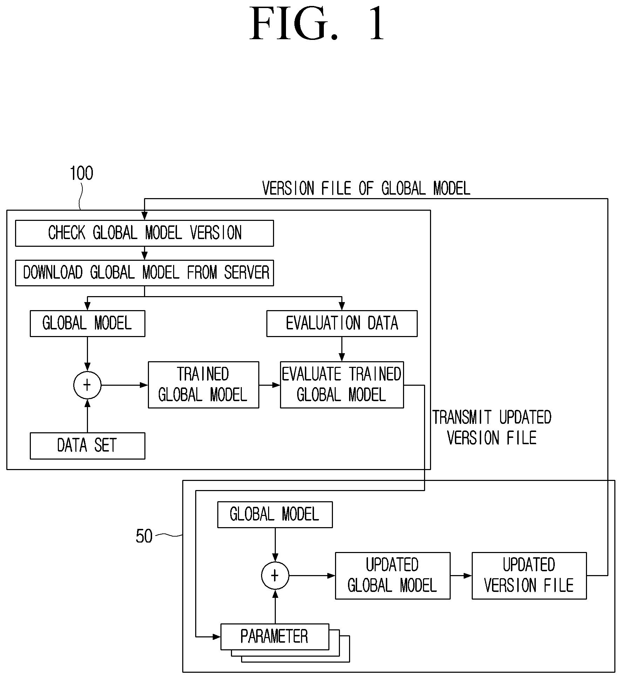

FIG. 1 is a view provided to explain a method in which an electronic apparatus performs federated learning on a neural network model in association with a server according to one or more embodiments. As illustrated in FIG. 1, an electronic apparatus 100 may perform federated learning on a global neural network in association with a server 50. For example, the global neural network model (hereinafter, referred to as a "global model") may be a neural network model generated in the server 50, and may be a neural network model distributed to a plurality of electronic apparatuses connected to the server 50. The electronic apparatus 100 may perform learning on a global model using a pre-stored data set. As a result, the electronic apparatus 100 may obtained a learned neural network model. Also, the electronic apparatus 100 may store the trained global model as a local neural network model (hereinafter, referred to as a "local model"). The electronic apparatus 100 may perform an inference operation using a local model.

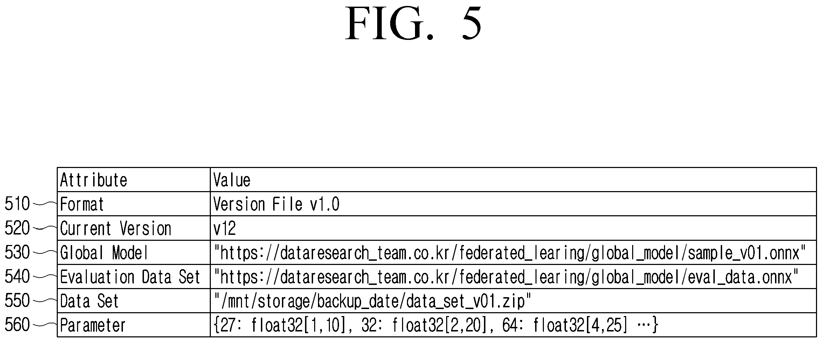

The server 50 may transmit a version file of a global model to the electronic apparatus 100. For example, the version file of the global model may be a file including information regarding the global model and information regarding evaluation data, an example of which is described in detail with reference to FIG. 5. In embodiments, information regarding a thing may be referred to as information about the thing.

The electronic apparatus 100 may check the version of the global model based on the version file. Here, when it is determined that the received global model is not a latest version of the global model (e.g., when it is determined that the version of the received global model is the same as or lower than the local model stored in the electronic apparatus 100), the electronic apparatus 100 may ignore the version file of the received global model. In embodiments, when a first version is referred to as lower than a second version, this may mean that the first version is earlier than, older than, or less recently updated than, the second version. Similarly, when the first version is referred to as higher than the second version, this may mean that the first version is later than, newer than, or more recently updated than, the second version.

When it is determined that the received global model is a latest version of the global model based on the version file, the electronic apparatus 100 may download the global model from the server 50 based on the version file.

The electronic apparatus 100 may performing learning on a global model based on the downloaded global model and the data set. For example, the data set may be a data set including personal information (e.g., health information, photo information taken by a user, etc.) stored in the electronic apparatus 100, but embodiments are not limited thereto. The data set may be a data set stored in an external device connected to the electronic apparatus 100.

The electronic apparatus 100 may obtain a global model trained through learning. For example, the trained global model may include updated parameters (e.g., weights).

The electronic apparatus 100 may obtain evaluation data based on a version file. For example, the evaluation data is data for evaluating a trained global model, and may include at least one of input data for obtaining a result value from a global model or a trained global model and correct answer data corresponding to the input data.

The electronic apparatus 100 may evaluate a trained global model based on evaluation data. For example, the electronic apparatus 100 may obtain a first accuracy regarding a result value output by inputting evaluation data to a global model, obtain a second accuracy regarding a result value output by inputting evaluation data to a trained global model, and evaluate the trained global model by comparing the first accuracy with or to the second accuracy. In embodiments, the first accuracy may be, or may include, first accuracy information indicating a first accuracy level which represents or corresponds to an accuracy of the result value output by inputting the evaluation data to the global model, and the second accuracy may be, or may include, second accuracy information indicating a second accuracy level which represents or corresponds to an accuracy of the result value output by inputting the evaluation data to the trained global model. In embodiments, the inputting may be referred to as providing.

After evaluating the trained global model, the electronic apparatus 100 may update the version file. Specifically, the electronic apparatus 100 may update the version file by adding information regarding the updated parameters to the version file.

The electronic apparatus 100 may transmit the updated version file to the server 50. For example, in order to increase the security of the version file, the electronic apparatus 100 may perform Secured Sockets Layer/Transport Layer Security (SSL/TLS) encoding on the updated version file to encode the updated version file and transmit the same to the server 50.

The server 50 may obtain an updated global model based on a pre-stored global model and information regarding parameters received from a plurality of electronic apparatuses. For example, the server 50 may obtain an updated global model based on updated parameters obtained from a plurality of electronic apparatuses.

The server 50 may obtain an updated version file based on an updated global model. For example, the server 50 may obtain a version file regarding a new version of the global model.

The server 50 may perform federated learning regarding the global model by distributing the version file regarding the new version of the global model to the plurality of apparatuses.

As described above, by directly training and evaluating the global model in the electronic apparatus 100 and transmitting information regarding the updated global model based on the evaluation result to the server 50, data corruption problems that may occur in the process of directly updating the global model by the server 50 can be overcome. In addition, when the evaluation result is low, information regarding the trained global model may be not transmitted to the server 50, and the problem of generating unintended results as an external attacker adjusts the evaluation data sample of the server 50 can be overcome.

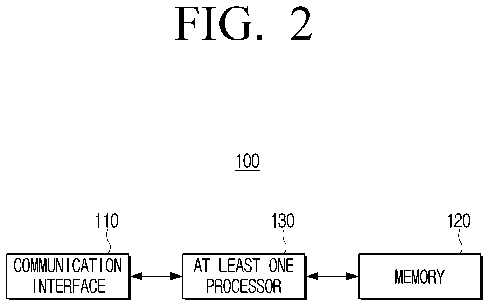

FIG. 2 is a block diagram illustrating configuration of an electronic apparatus according to one or more embodiments. As illustrated in FIG. 2, the electronic apparatus 100 may include a communication interface 110, a memory 120 and at least one processor 130. For example, the electronic apparatus 100 illustrated in FIG. 1 may be a user terminal such as a mobile device, a personal computer (PC), a smartphone, a tablet PC, a notebook PC, a laptop PC, etc., but embodiments are not limited thereto. The electronic apparatus 100 may be implemented as various devices such as a smart television (TV), a home appliance, an Internet of Things (IoT) device, etc. In addition, the configuration of the electronic apparatus 100 illustrated in FIG. 2 is only an example, and embodiments are not limited thereto. For example, some of the features may be added or deleted according to the type of the electronic apparatus 100.

The communication interface 110 may include at least one circuit, and may perform communication with various external devices or servers. The communication interface 110 may include at least one of a Bluetooth Low Energy (BLE) module, a WiFi communication module, a cellular communication module, a 3^{rd} Generation (3G) mobile communication module, a 4^{th} Generation (4G) mobile communication module, a 4^{th} Generation Long Term Evolution (LTE) communication module, and a 5^{th} Generation (5G) mobile communication module.

In particular, the communication interface 110 may receive a version file of a global model from the external server 50. In addition, the communication interface 110 may transmit an updated version file including information regarding a trained global model to the server 50.

In addition, the communication interface 110 may download a global model or evaluation data based on information recorded in a version file.

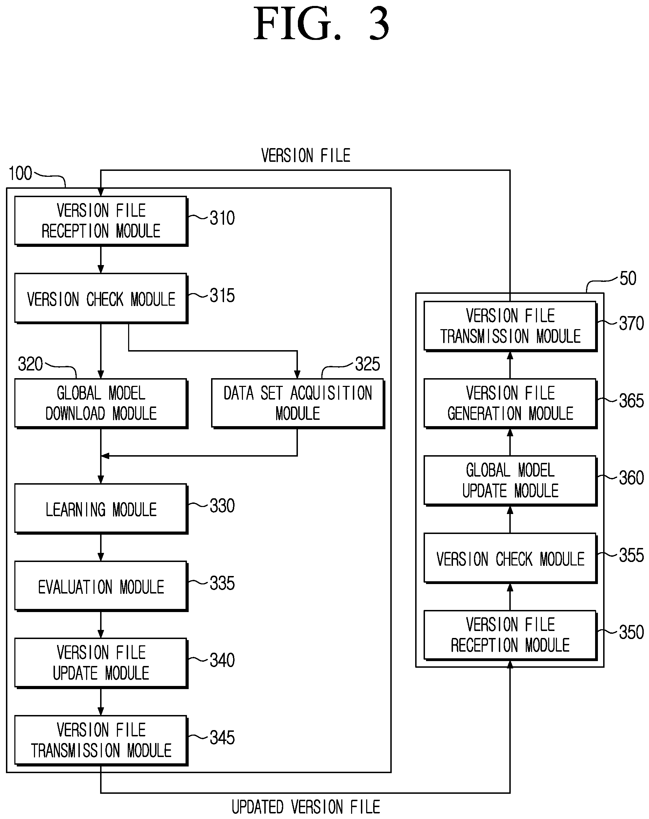

The memory 120 may store an Operating System (OS) for controlling the overall operations of the components of the electronic apparatus 100 and instructions or data related to the components of the electronic apparatus 100. In particular, in order to perform federated learning regarding a global model in association with the server 50, as illustrated in FIG. 3, the memory 120 may include a version file reception module 310, a version check module 315, a global model download module 320, a data set acquisition module 325, a learning module 330, an evaluation module 335, a version file update module 340, and a version file transmission module 345. In particular, when a function for performing federated learning regarding a global model is executed, the electronic apparatus 100 may load data regarding various modules for performing federated learning regarding a global model in association with the server 50 stored in a non-volatile memory onto a volatile memory. Here, loading may refer to an operation of calling and storing data stored in a non-volatile memory onto a volatile memory so that at least one processor 130 can access it.

In embodiments, the memory 120 may be implemented as a non-volatile memory (e.g., hard disk, Solid state drive (SSD), a flash memory), a volatile memory (which may also include a memory in the processor 111), and the like.

In addition, the memory 120 may store information regarding a local model. For example, the local model may be a neural network model obtained by the electronic apparatus 100 performing learning on a previous version of the global model.

In addition, the memory 120 may store a data set. The data set may be a data set for training a global model, and may include personal information.

The at least one processor 130 may control the electronic apparatus 100 according to at least one instruction stored in the memory 120.

In particular, the at least one processor 130 may include one or more processors. In detail, at least one processor may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor may control one of other components of the electronic device or any combination thereof, and perform operations related to the communication or the data processing. At least one processor may execute at least one program or instruction stored in the memory. For example, at least one processor may perform a method according to one or more embodiments of the disclosure by executing at least one instruction stored in the memory.

When a method according to one or more embodiments includes a plurality of operations, the plurality of operations may be performed by one processor or a plurality of processors. For example, when a first operation, a second operation and a third operation are performed by the method according to one or more embodiments, the first operation, the second operation and the third operation may all be performed by the first processor, or the first operation and the second operation may be performed by the first processor (e.g., a general-purpose processor) and the third operation may be performed by the second processor (e.g., an AI-only processor). For example, the version check operation of the global model and the evaluation operation of the trained global model may be performed by the first processor (e.g., CPU), and the learning operation regarding the global model may be performed by the second processor (e.g., GPU or NPU).

The one or more processors may be implemented as single core processors each including one core, or may be implemented by one or more multi-core processors each including a plurality of cores (e.g., multiple homogeneous cores or multiple heterogeneous cores). In a case where the one or more processors are implemented as multi-core processors, each of the plurality of cores included in the multi-core processor may include a memory such as a cache memory or an on-chip memory inside the processor, and a common cache shared by the plurality of cores may be included in the multi-core processor. In addition, each of the plurality of cores (or some of the plurality of cores) included in the multi-core processor may independently read and execute program instructions for implementing the method according to one or more embodiments of the disclosure, or all (or some) of the plurality of cores may be linked to each other to read and execute program instructions for implementing the method according to one or more embodiments of the disclosure

In a case where the method according to one or more embodiments of the disclosure includes a plurality of operations, the plurality of operations may be performed by one of the plurality of cores included in the multi-core processor, or may be performed by two or more of the plurality of cores. For example, when a first operation, a second operation, a third operation are performed by the method according to one or more embodiments, all of the first operation, the second operation, and the third operation may be performed by a first core included in the multi-core processor, or the first operation and the second operation may be performed by the first core included in the multi-core processor, and the third operation may be performed by a second core included in the multi-core processor.

In embodiments of the disclosure, the processor may refer to a system on chip (SoC) in which one or more processors and the other electronic components are integrated, a single-core processor, a multi-core processor, or a core included in the single-core processor or the multi-core processor. Here, the core may be implemented as a CPU, a GPU, an APU, an MIC, a DSP, an NPU, a hardware accelerator or a machine learning accelerator, but the embodiments of the disclosure are not limited thereto.

In particular, the at least one processor 130 may receive information regarding a global model and information regarding evaluation data from the server 50 through the communication interface 110. The at least one processor 130 may obtain a data set for training the global model. In addition, the at least one processor 130 may train the global model using the data set. The at least one processor 130 may evaluate the trained global model by inputting the evaluation data to the trained global model. In addition, the at least one processor 130 may determine whether to transmit information regarding the trained global model to the server 50 based on the evaluation result.

In particular, the at least one processor 130 may obtain a first accuracy regarding a result value output by inputting the evaluation data to the global model. The at least one processor 130 may obtain a second accuracy regarding a result value output by inputting the evaluation data to the trained global model. Also, the at least one processor 130 may evaluate the trained global model by comparing the first accuracy with or to the second accuracy. For example, when it is determined that the second accuracy is higher than the first accuracy, the at least one processor 130 may determine whether to transmit information regarding the trained global model to the server 50.

In embodiments, information regarding the global model may include version information of the global model and address information from which the global model is downloadable. For example, the address information may indicate an address from which the global model is downloadable. For example, the at least one processor 130 may compare version information of the local model stored in the electronic apparatus 100 and version information of the global model. When it is determined that the version of the global model is higher than the version of the local model, the at least one processor 130 may download the global model through the communication interface 110 based on the address information from which the global model is downloadable.

In addition, the at least one processor 130 may receive a version file including information regarding the global model and information regarding the evaluation data from the server 50 through the communication interface 110. In addition, the at least one processor 130 may obtain address information regarding a data set pre-stored in the electronic apparatus 100. For example, the at least one processor 130 may add the obtained address information regarding the data set to the version file.

In addition, the at least one processor 130 may update the version file to that the version file includes parameter information regarding the trained global model based on the evaluation result. In addition, the at least one processor 130 may control the communication interface 110 to transmit the updated version file to the server 50.

Also, the at least one processor 130 may control the communication interface 110 to delete the address information regarding the data set added to the version file and transmit the same to the server 50.

In addition, the at least one processor 130 may perform Secured Sockets Layer/Transport Layer Security (SSL/TLS) encoding on the trained global model and transmit the same to the server 50.

Also, the at least one processor 130 may store the trained global model in the memory 120 as a local model.

FIG. 3 is a block diagram illustrating configuration of an electronic apparatus and a server for performing federated learning according to one or more embodiments. As illustrated in FIG. 3, the electronic apparatus 100 may include a version file reception module 310, a version check module 315, a global model download module 320, a data set acquisition module 340, a learning module 330, an evaluation module 335, a version file update module 340, and a version file transmission module 345. In addition, as illustrated in FIG. 3, the server 50 may include a version file reception module 350, a version check module 355, a global model update module 360, a version file generation module 365, and a version file transmission module 370.

The version file reception module 310 may receive a version file generated by the version file generation module 365. For example, the version file may include information regarding the global model and information regarding the evaluation data. The information regarding the global model may include version information regarding the global model and address information from which the global model is downloadable. In addition, the information regarding the evaluation data may include address information from which the evaluation data is downloadable. For example, the global model may be a neural network model generated (or updated) by the server 50, and the evaluation data may mean test data for evaluating accuracy of the global model. Specifically, the evaluation data may include at least one of input data for obtaining a result value from the global model or the trained global model and correct answer data corresponding to the input data.

In embodiments, the version file may be written in the form of JavaScript Object Notation (JSON), but embodiments are not limited thereto. The version file may be implemented in various methods such as DataBase Management System (DBMS), Creating Shared Value (CSV), etc.

The version check module 315 may identify version information of the global model included in the version file received by the version file reception module 310. The version check module 315 may compare version information of the local model stored in the electronic apparatus 100 and version information of the global model corresponding to the version file.

Specifically, the version check module 315 may determine whether the version of the global model corresponding to the version file is higher than the version of the local model stored in the electronic apparatus 100, or for example is the latest version of the global model.

When the version of the global model is lower than or equal to the version of the local model (e.g., when the version of the global model is not newer than the version of the local model), the version check module 315 may ignore the received version file. For example, the version check module 315 may delete the received version file.

When the version of the global model is higher than the version of the local model (e.g., when the version of the global model is newer than the version of the local model), the global model download module 320 may download the global model from the server 50 (or other database connected to the server 50). In particular, the global model download module 320 may download the global model based on address information from which the global model included in the version file is downloadable.

The data set acquisition module 325 may obtain a data set for training the global model. For example, the data set may be a data set stored in the electronic apparatus 100, but embodiments are not limited thereto. The data set may be a data set stored in an external device (e.g., a cloud server which can be logged in with a user account, etc.). According to one or more embodiments, the data set may be a data set of private data including personal information.

In addition, the data set acquisition module 325 may determine whether the data set obtained to train the current global model is an updated data set compared to the data set used when learning the previous version. When the data set obtained to train the current global model is updated data compared to the data set used when learning the previous version, the data set acquisition module 325 may output the data set to the learning module 330. However, when the data set obtained to train the current global model is a data set which is same as the data set used when learning the previous version, the data set acquisition module 325 may wait until a version file of the next version of the global model is received, or an updated data set is obtained, without outputting the data set to the learning module 330.

In embodiments, the data set acquisition module 325 may add information about the obtained data set to the version file. Specifically, the data set acquisition module 325 may add address information corresponding to the obtained date set to the version file.

The learning module 330 may train the global model using the global model downloaded by the global model download module 320 and the data set obtained by the data set acquisition module 325. For example, the learning module 330 may train a neural network model to generate a predefined neural network model (or operation rule) having desired characteristics by applying a learning algorithm to the learning data included in the data set.

For example, the neural network model may include a plurality of neural network layers. At least one layer may have at least one weight value, and a layer operation is performed through an operation result of a previous layer and at least one defined operation. Examples of the neural network include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep q-network, a transformer, or the like, and the neural network in the present disclosure is not limited thereto except for the cases specified. Also, the learning algorithm may be a method of training a predetermined target device (e.g., an electronic apparatus) using a plurality of learning data to make a decision or make a prediction by itself. Examples of the learning algorithm include supervised learning, unsupervised learning, semi-supervised learning or reinforcement learning, and the learning algorithm is not limited thereto except for the cases specified.

The evaluation module 335 may perform evaluation on the global model trained by the learning module 330. Specifically, the evaluation module 335 may obtain evaluation data based on address information from which evaluation data included in the version file is downloadable. For example, the evaluation data may include input data to be input into the global model and correct answer data (or for example label data) corresponding to the input data in order to obtain a result value from the global model. For example, when the global model is an object recognition model for recognizing an object in an image, the evaluation data may include information regarding an object included in an image as correct answer data, together with the image as input data.

In addition, the evaluation module 335 may evaluate accuracy of the global model (before being trained) and accuracy of the trained global model based on evaluation data. For example, the evaluation module 335 may calculate an accuracy (for example an accuracy level) of the global model by comparing a result value obtained by inputting the input data among the evaluation data to the global model with the correct answer data included in the evaluation data. As another example, the evaluation module 335 may calculate an accuracy (for example an accuracy level) of the trained global model by comparing a result value obtained by inputting the input data among the evaluation data to the trained global model with the correct answer data included in the evaluation data.

Specifically, the evaluation module 335 may obtain a result value output by inputting the evaluation data to the global model. In addition, the evaluation module 335 may obtain a first accuracy regarding the result value obtained from the global model (before training) by comparing the obtained result value with the correct answer data. Also, the evaluation module 335 may obtain a result value output by inputting the evaluation data to the trained global model. The evaluation module 335 may obtain a second accuracy regarding the result value obtained from the trained global model by comparing the obtained result value with the correct answer data. Also, the evaluation module 335 may evaluate the trained global model by comparing the first accuracy with the second accuracy. The evaluation module 335 may determine whether to transmit the information regarding the trained global model to the server 50 based on the evaluation result. Specifically, when it is determined that the second accuracy is higher than the first accuracy, the evaluation module 335 may determine to transmit the information regarding the trained global model to the server 50. However, when it is determined that the second accuracy is lower than or equal to the first accuracy, the evaluation module 335 may determine not to transmit the information regarding the trained global model to the server 50.

When it is determined that the second accuracy is higher than the first accuracy, the version file update module 340 may update the version file by adding the information regarding the trained global model to the version file. Specifically, the version file updated module 340 may update the version file by adding information regarding parameters (e.g., weights, etc.) included in the trained global model to the version file. For example, the version file update module 340 may add information regarding updated parameters from among a plurality of parameters included in the global model to the version file, but embodiments are not limited thereto. For example, the version file update module 340 may add all information regarding the plurality of parameters included in the trained global model to the version file.

In addition, according to one or more embodiments, the version file update module 340 may update the version file to delete the data set added to the version file in order to protect personal information.

In embodiments, the electronic apparatus 100 may store the trained global model as a local model. For example, the electronic apparatus 100 may update the pre-stored local model to the trained global model. Accordingly, the electronic apparatus 100 may perform an inference operation using the trained global model as a local model.

The version file transmission module 345 may transmit the updated version file to the server 50. For example, the version file transmission module 345 may encode the updated version file through a Secured Sockets Layer/Transport Layer Security (SSL/TLS) encoding process. For example, the SSL/TLS encoding is a protocol used for encryption, and data may be encrypted using a symmetric key algorithm or an asymmetric key algorithm.

For example, the version file transmission module 345 may encrypt the updated version file through the SSL/TLS encoding processor and compress the updated version file. As a result, the security of the updated version file including personal information can be improved, network costs can be lowered, and the updated version file can be quickly transmitted.

The version file reception module 350 of the server 50 may receive the updated version file transmitted from the electronic apparatus 100. For example, as described above, the updated version file may be encrypted through the SSL/TLS encoding. The version file reception module 350 may decrypt the encrypted updated version file through the SSL/TLS decoding process.

The version check module 355 may identify version information regarding a trained global model recorded in the updated version file. For example, the version check module 355 may determine whether to use the trained global model received from the electronic apparatus 100 based on at least one of the number of pre-transmitted version files and the version information regarding the trained global model.

Specifically, the server 50 may transmit a version file regarding the same version of the global model to a predetermined number of electronic apparatuses in order to perform federated learning of the global model. For example, the server 50 may perform federated learning using the updated version file received from electronic apparatuses up to a threshold number among the predetermined number. Accordingly, the version check module 355 may determine whether the number of updated version files received from the electronic apparatus 100 exceeds the threshold number. For example, when a version form regarding a global model is transmitted to 100 electronic apparatuses, the version check module 355 may determine whether the version file of the same version as the updated version file received from the electronic apparatus 100 exceeds a threshold value (e.g., eighty (80)). If eighty (80) version files of the same version are already received, the version check module 355 may eliminate the update version file received from the electronic apparatus 100, and may not perform federated learning using the updated version file. However, if less than eighty (8)0 version files of the same version are received, the version check module 355 may output a version file to the global model update module 360 in order to perform federated learning using the updated version file received from the electronic apparatus 100.

In addition, the version check module 355 may determine whether the version recorded in the currently received version file is a version prior to the version designated by an operator. For example, when the version recorded in the currently received version file is version 13 (v13) and the version set by the user is version 11 (v11), the version check module 355 may output a version file to the global model update module 360 in order to perform federated learning using the updated version file received from the electronic apparatus 100. However, when the version recorded in the currently received version file is version 10 (v10) and the version set by the user is v11, the version check module 355 may eliminate the updated version file received from the electronic apparatus 100, and may not perform federated learning using the updated version file. For example, the server 50 may perform federated learning using only a version file regarding a version within the a range of versions set by the operator.

The global model update module 360 may perform federated learning based on information regarding the trained global model recorded in the updated version file. For example, the federated learning may be performed based on information regarding the trained global model received from a plurality of electronic apparatuses. Specifically, the global model update module 360 may obtain a representative value (e.g., average value, mode, etc.) for each parameter regarding the trained global model received from a plurality of electronic apparatuses. Also, the global model update module 360 may update the global model using the representative value for each parameter. The global model update module 360 may store the updated global model in a predetermined storage space.

The version file generation module 365 may generate a new version file based on the updated global model. Specifically, the version file generation module 365 may generate new version information which includes information regarding the version of the updated global model and address information from which the updated global model is downloadable.

The version file transmission module 370 may transmit the version file regarding the updated global model to a plurality of electronic apparatuses. According to one or more embodiments, the version file transmission module 370 may encode the version file regarding the updated global model through the Secured Sockets Layer/Transport Layer Security (SSL/TLS) encoding process and transmit the same to a plurality of electronic apparatuses.

As described above, the electronic apparatus 100 may directly learn a global model and transmit a learned parameter to the server 50, making it possible to prevent damage to the global model that may occur in the process of updating the global model. **In** addition, by directly managing a data set in the electronic apparatus 100 and performing evaluation on the directly trained global model, it may be possible to prevent damage to learning data and evaluation data. Further, because training and evaluation of the global model may be performed within the electronic apparatus 100 instead of the server 50, the server construction cost can be reduced.

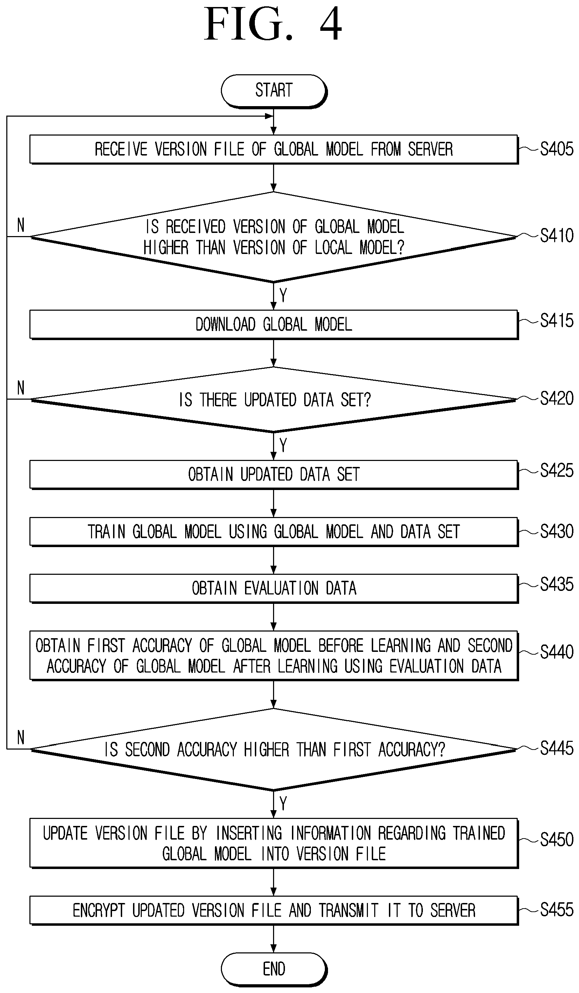

Hereinafter, an example of a method in which the electronic apparatus 100 and the server 50 work together to perform federated learning is described in greater detail with reference to FIGS. 4 to 12.

FIG. 4 is a flowchart provided to explain a controlling method of an electronic apparatus that performs federated learning using a version file according to one or more embodiments.

The electronic apparatus 100 may receive a version file regarding a global model from the server 50 at operation S405. For example, the electronic apparatus 100 may receive a version file regarding a first version of a global model from the server 50.

Here, the version file may be a file that includes information regarding a global model and information regarding evaluation data. An example of the version file is described in greater detail with reference to FIG. 5.

As illustrated in FIG. 5, the version file may include format information 510 of the version file, current version information 520 of the global model, address information 530 from which the global model is downloadable, address information 540 from which the evaluation data is downloadable, address information 550 for storing a data set, and information 560 regarding a parameter of the trained global model. The format information 510 of the version file may include information regarding the format name of the current file. The current version information 520 of the global model may include information regarding the current version of the global model corresponding to the current version file. The address information 530 from which the global model is downloadable may include address information of the server 50 or the global model stored in external database connected to the server 50. The address information 540 from which the evaluation data is downloadable is evaluation data capable of evaluating the global model, and may include address information that stores a data set capable of evaluating the accuracy of the global model. The address information 550 that stores a data set may include address information of a data set for training the global model stored in the electronic apparatus. In embodiments, the address information 530, the address information 540, and the address information 550 may be or may include at least one of a file name, a uniform resource indicator (URI), and a uniform resource locator (URL). The information 560 regarding a parameter of the trained global model may include information regarding a parameter of the global model trained by the data set and here, the format of the parameter may be written in JSON, DBMS, CSV, etc.

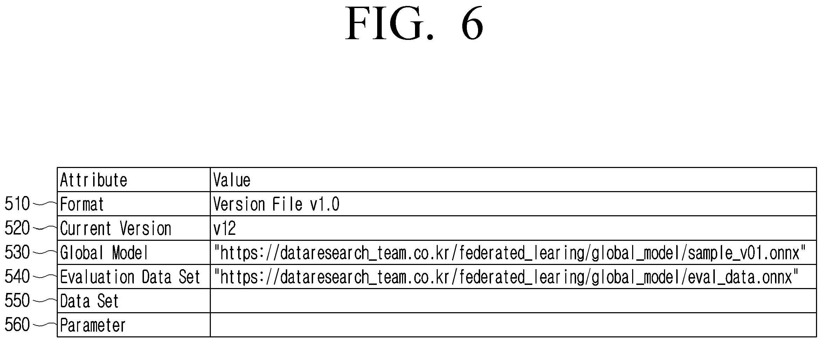

In embodiments, as illustrated in FIG. 6, the version file that the electronic apparatus 100 receives from the server 50 may not include the address information 550 that stores a data set and the information 560 regarding a parameter of the trained global model, and may include the format information 510 of the version file, the current version information 520 of the global model, the address information 530 from which the global model is downloadable, and the address information 540 from which the evaluation data is downloadable.

The electronic apparatus 100 may determine whether the version of the received global model is higher than the version of a local model at operation S410. For example, the electronic apparatus 100 may determine whether the version of the global model corresponding to the version file received from the server 50 is higher than the version of the local model stored in the electronic apparatus 100 based on the current version information 520 of the global model recorded in the version file.

When it is determined that the version of the received global model is not higher than the version of the local model (N at operation S415), the electronic apparatus 100 may wait to receive a version file of a new version of the global model from the server 50. For example, when the version of the received global model is not the latest version, the electronic apparatus 100 may wait to receive a version file of a new version of the global model without performing a training operation for the received global model.

When it is determined that the version of the received global model is higher than the version of the local model (Y at operation S415), the electronic apparatus 100 may download the global model at operation S415. Specifically, the electronic apparatus 100 may download the global model based on the address information 530 from which the global model recorded in the version file is downloadable.

The electronic apparatus 100 may determine whether there is an updated data set at operation S420. Specifically, the electronic apparatus 100 may determine whether there is an updated data set compared to a data set for training the previous version of the global model (e.g., the global model corresponding to the local model currently stored in the electronic apparatus 100).

When it is determined that there is no updated data set (NO at operation S420), the electronic apparatus 100 may wait without performing a training operation for the received global model. For example, the electronic apparatus 100 may wait until a version file of a new version of the global model is received or the data set is updated.

When it is determined that there is an updated data set (YES at operation S420), the electronic apparatus 100 may obtain the updated data set at operation S425. For example, the electronic apparatus 100 may obtain a data set by accessing a data set stored in a predetermined area or stored in an external device (e.g., a cloud server which can be logged in with a user account, etc.) connected to the electronic apparatus 100. For example, the electronic apparatus 100 may obtain a plurality of individual images stored in an image folder as a data set. The electronic apparatus 100 may perform concatenation based on a machine-learning (ML) framework and then load the image files, or load the image file based on the image folder name.

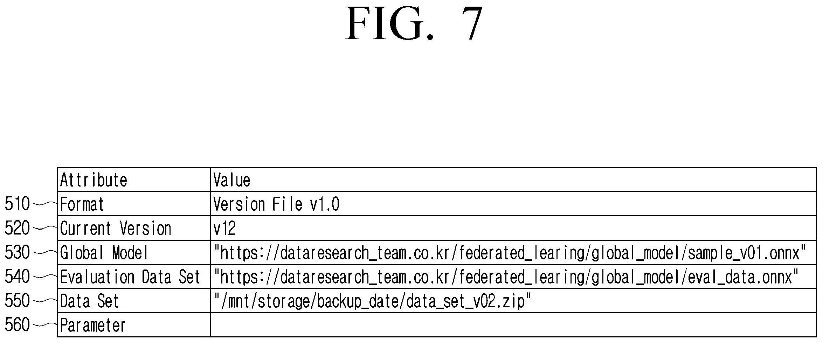

For example, as illustrated in FIG. 7, the electronic apparatus 100 may add information regarding an address at which a data set is stored to address information 550 indicating a data set of a version file.

The electronic apparatus 100 may train a global model using a global model and a data set at operation S430. For example, the electronic apparatus 100 may train a global model using various learning algorithms. For example, learning algorithms may include supervised learning, unsupervised learning, semi-supervised learning, or reinforcement learning, but embodiments are not limited thereto. A global mode can be trained using learning algorithms corresponding to various methods.

In embodiments, the electronic apparatus 100 may store a global model that is trained using a learning algorithm as a local model. For example, the electronic apparatus 100 may store a trained global model as a local model instead of a pre-stored local model.

The electronic apparatus 100 may obtain evaluation data at operation S435. For example, the evaluation data may include input data to be input into the global model and correct answer data (or for example label data) corresponding to the input data in order to obtain a result value from the global model.

Specifically, the electronic apparatus 100 may download the evaluation data stored in the server 50 or database connected to the server 50 onto a predetermined area of the electronic apparatus 100 based on address information 540 from which evaluation data of a version file is downloadable and perform decompression. For example, when the used ML framework is Keras, the electronic apparatus 100 may store an evaluation data set in a specific location within the memory 120 of the electronic apparatus 100. The decompressed evaluation data set may include a predetermined number (e.g., 10,000) of image files (e.g., cat pictures, etc.) in a data batch file and label data of the image files.

The electronic apparatus 100 may obtain a first accuracy of a global model before learning, and a second accuracy of the trained global model, using evaluation data at operation S440. For example, the electronic apparatus 100 may compare a result value obtained by inputting input data included in evaluation data to a global model before learning (i.e., a global model downloaded from the server 50) and correct answer data included in the evaluation data. The electronic apparatus 100 may obtain the first accuracy based on the comparison result.

In addition, the electronic apparatus 100 may compare a result value obtained by inputting input data included in the evaluation data to the trained global model and correct answer data included in the evaluation data. The electronic apparatus 100 may obtain the second accuracy based on the comparison result.

The electronic apparatus 100 may determine whether the second accuracy is higher than the first accuracy at operation S445. For example, the electronic apparatus 100 may evaluate the trained global model by comparing the second accuracy with the first accuracy, and determine whether to transmit information regarding the trained neural network model to the server 50 based on the evaluation result.

When it is determined that the second accuracy is lower than or equal to the first accuracy (N at operation S445), the electronic apparatus 100 may wait until a version file of the next version is received without transmitting the trained global model to the server 50. For example, the electronic apparatus 100 may store the trained global model as a local model regardless of the evaluation result, and may perform an inference operation using the trained global model.

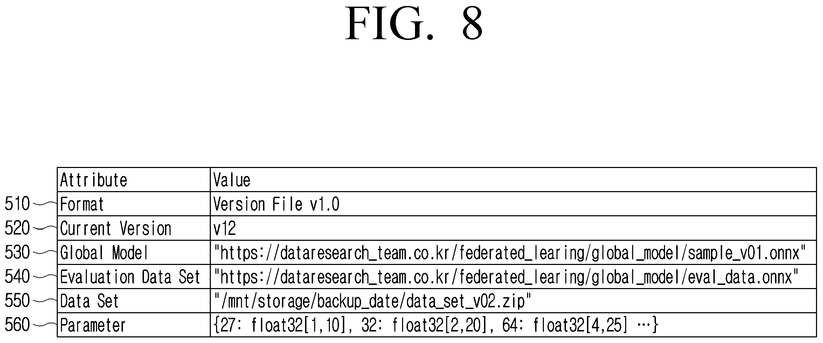

When it is determined that the second accuracy is higher than the first accuracy (Y at S445), the electronic apparatus 100 may update the version file by inserting information regarding the trained global model into the version file at operation S450. As illustrated in FIG. 8, the electronic apparatus 100 may update the version file by inserting information regarding an updated parameter into the information 560 regarding the parameter of the trained global model. In embodiments, the electronic apparatus 100 may include information regarding only the updated parameter, but this is merely an example. For example, the electronic apparatus 100 may include all information regarding parameters included in the trained global model. In addition, parameters may be written in various formats such as JSON, DBMS, CSV, etc.

The electronic apparatus 100 may encrypt the updated version file and transmit the same to the server 50 at operation S455. For example, the electronic apparatus 100 may encrypt the updated version file by performing the SSL/TLS encoding on the updated version file. Subsequently, the electronic apparatus 100 may transmit the encrypted version file to the server 50.

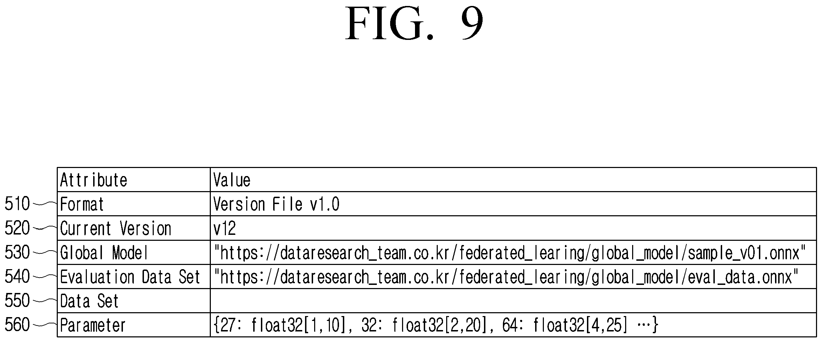

According to one or more embodiments, the electronic apparatus 100 may delete the address information 550 that stores the data set recorded in the version file before encrypting the updated version file, as illustrated in FIG. 9. By deleting the address information 550 that stores the data set, the electronic apparatus 100 can protect personal information included in the data set.

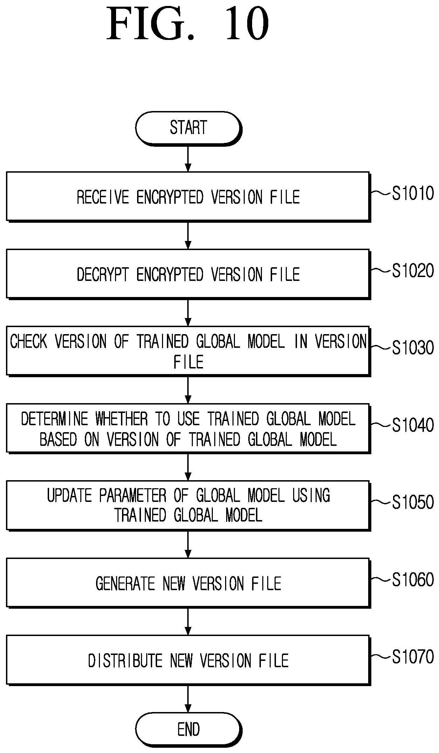

FIG. 10 is a flowchart provided to explain a controlling method of the server 50 that performs federated learning using a version file according to one or more embodiments.

The server 50 may receive the encrypted version file from the electronic apparatus 100 at operation S1010. For example, the encrypted version file may be a version file obtained by encrypting the version file illustrated in FIG. 8 or FIG. 9. For example, the encrypted version file may include information regarding the trained global model.

The server 50 may decrypt the encrypted version file at operation S1020. For example, the server 50 may decrypt the encrypted version file through the SSL/TLS decoding.

The server 50 may check the version of the trained global model within the version file at operation S1030. For example, the server 50 may check the version of the trained global model based on the current version information 520 within the version file as illustrated in FIG. 8 or FIG. 9.

The server 50 may determine whether to use the trained global model based on the version of the trained global model at operation S1040.

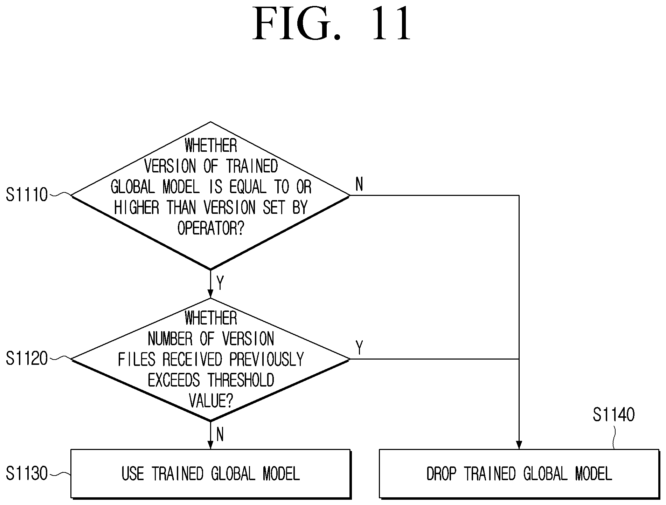

For example, the server 50 may not perform federated learning regarding the global model using all of the trained global models received from a plurality of apparatuses, and may perform federated learning regarding the global model using the trained global model that satisfies conditions, an example of which is described with reference to FIG. 11.

Specifically, the server 50 may determine whether the version of the trained global model is equal to or greater than the version set by the operator at operation S1110. For example, when the version set by the operator is v10, the server 50 may determine whether the version of the trained global model is v10 or higher.

When the version of the trained global model is less than the version set by the operator (N at operation S1110), the server 50 may drop the trained global model at operation S1140. For example, the server 50 may not use a trained global model having an older version which is lower than the version set by the operator for federated learning.

When the version of the trained global model is equal to or greater than the version set by the operator (Y at operation S1110), the server 50 may determine whether the number of previously received version files exceeds a threshold value at operation S1120. For example, when the server 50 is set to transmit a version file to 100 electronic apparatuses and receive a version file including eighty (80) trained global models, the server 50 may determine whether the number of previously received version files exceeds the threshold value of eighty (80).

When the number of previously received version files exceeds the threshold value (Y at operation S1120), the server 50 may drop the trained global model at operation S1150.

When the number of previously received version files is less than the threshold value (N at operation S1120), the server 50 may use the trained global model at operation S1130. For example, the server 50 may perform federated learning using only information regarding the trained global model having the latest version.

In embodiments, the server 50 may set a collection period for whether or not to use the trained global model. For example, the server 50 may drop the trained global model that goes beyond the collection period (e.g., thirty (30) days, etc.) without using it for federated learning.

Referring back to FIG. 10, the server 50 may update the parameter of the global model using the trained global model at operation S1050. For example, the server 50 may update the parameter of the global model stored in the server 50 using information regarding the parameter of the trained global model received from a plurality of electronic apparatuses. For example, the server 50 may obtain a representative value (e.g., an average value, a mode value, etc.) for each parameter based on parameter information regarding the trained global model received from the plurality of electronic apparatuses. In addition, the server 50 may update the global model using the representative value for each parameter. The server 50 may store the updated global model in a predetermined area or database connected to the server 50.

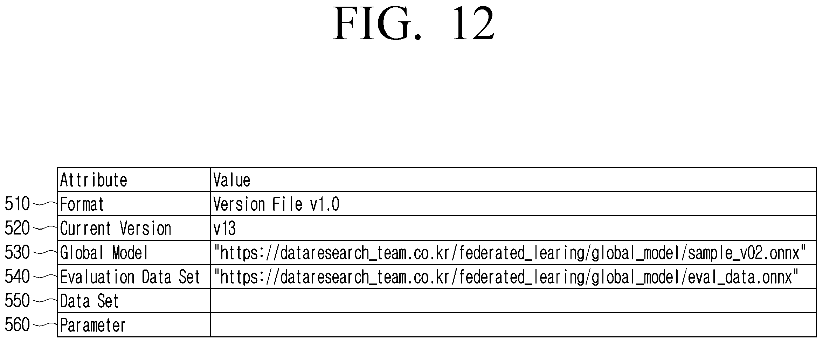

The server 50 may generate a new version file at operation S1060. For example, as illustrated in FIG. 12, the server 50 may update the version recorded in the current version information 520 of the global model to the next version, and update the address information 530 from which the global model is downloadable to address information that stores the updated global model. For example, the server 50 may generate a version file regarding a second version of the global model.

The server 50 may distribute the new version file at operation S1070. For example, the server 50 may distribute the new version file to a plurality of pre-registered electronic apparatuses 100. For example, the server 50 may transmit the version file regarding the second version of the global model to the plurality of electronic apparatuses 100.

In embodiments, according to the method described above, the server 50 may repeatedly perform federated learning regarding the global model in association with the electronic apparatus 100.

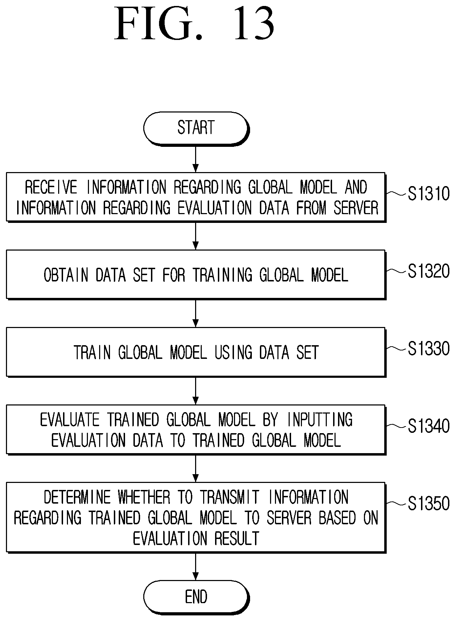

FIG. 13 is a flowchart provided to explain a controlling method of an electronic apparatus according to one or more embodiments.

First, the electronic apparatus 100 may receive information regarding a global model and information regarding evaluation data from the server 50 at operation S1310. For example, the electronic apparatus 100 may receive a version file including information regarding a global model and information regarding evaluation data from the server 50.

In addition, the information regarding a global model may include version information of the global model and address information from which the global model is downloadable. For example, the electronic apparatus 100 may compare version information of a local model stored in the electronic apparatus 100 and the version information of the global model. When it is determined that the version of the global model is higher than the version of the local model, the electronic apparatus 100 may download the global model based on the address information from which the global model is downloadable.

The electronic apparatus 100 may obtain a data set for training a global model at operation S1320. The electronic apparatus 100 may obtain address information regarding a data set pre-stored in the electronic apparatus 100 and add the obtained address information regarding the data set to the version file.

The electronic apparatus 100 may train the global model using the data set at operation S1330. The electronic apparatus 100 may store the trained global model in the memory as a local model.

The electronic apparatus 100 may evaluate the trained global model by inputting evaluation data to the trained global model at operation S1340. For example, the electronic apparatus 100 may obtain first accuracy regarding a result value output by inputting the evaluation to the global model. The electronic apparatus 100 may obtain second accuracy regarding a result value output by inputting the evaluation data to the trained global model. Subsequently, the electronic apparatus 100 may evaluate the trained global model by comparing the first accuracy and the second accuracy.

The electronic apparatus 100 may determine whether to transmit information regarding the trained global model to the server based on the evaluation result at operation S1350. Specifically, when it is determined that the second accuracy is higher than the first accuracy, the electronic apparatus 100 may determine to transmit information regarding the trained global model to the server 50.

In addition, the electronic apparatus 100 may update the version file to include parameter information regarding the trained global model based on the evaluation result. The electronic apparatus 100 may transmit the updated version file to the server 50.

Further, the electronic apparatus 100 may delete address information regarding the data set added to the version file and transmit the version file to the server 50.

In addition, the electronic apparatus 100 may encrypt information regarding the trained global model by performing Secured Sockets Layer/Transport Layer Security (SSL/TLS) encoding and transmit it to the server 50.

In embodiments, the server 50 may generate a new version of the global model based on the information regarding the trained global model received from the electronic apparatus.

According to one or more embodiments, the methods according to the various embodiments described above may be included and provided in a computer program product. The computer program product may be traded as a product between a seller and a purchaser. The computer program product refers to a product, and it can be traded between a seller and a buyer. The computer program product can be distributed in the form of a storage medium that is readable by machines (e.g.: a compact disc read only memory (CD-ROM)), or distributed directly on-line (e.g.: download or upload) through an application store (e.g.: Play Store^{™}), or between two user devices (e.g.: smartphones). In the case of on-line distribution, at least a portion of a computer program product (e.g.: a downloadable app) may be stored in a storage medium readable by machines such as the server of the manufacturer, the server of the application store, or the memory of the relay server at least temporarily, or may be generated temporarily.

According to one or more embodiments, methods according to the various embodiments may be implemented as software including instructions stored in machine-readable storage media, which are readable by a machine (e.g., a computer). The machine may be a device capable of calling a stored instruction from a storage medium and operating according to the called instruction, and may include an electronic apparatus according to the disclosed embodiments.

In embodiments, the device-readable storage medium may be provided in the form of a non-transitory storage medium. Here, 'non-transitory storage medium' only means that it is a tangible device and does not contain signals (e.g., electromagnetic waves). This term does not distinguish between a case in which data is stored semi-permanently in a storage medium and a case in which data is stored temporarily. For example, a 'non-transitory storage medium' may include a buffer in which data is temporarily stored.

When the instruction is executed by the processor, the processor may perform a function corresponding to the instruction directly or using other components under the control of the processor. The instruction may include a code generated or executed by a compiler or an interpreter.

The disclosure is not limited to the specific embodiments described above, and can be implemented by those of ordinary skill in the art pertaining to the disclosure without departing from the scope of the claims. Various modifications are possible by the disclosure, of course, and these modifications should be understood to be included the technical spirit or perspective of the disclosure.

## Claims

1. An electronic apparatus comprising:
a communication interface;
a memory configured to store at least one instruction; and
at least one processor configured to:
receive information regarding a global neural network model and information regarding evaluation data from a server using the communication interface;
obtain a data set for training the global neural network model;
train the global neural network model based on the data set;
evaluate the trained global neural network model by inputting the evaluation data to the trained global neural network model; and
determine whether to transmit information regarding the trained global neural network model to the server based on a result of the evaluating.

2. The electronic apparatus as claimed in claim 1, wherein the at least one processor is further configured to:
obtain a first accuracy level regarding a result value output by inputting the evaluation data to the global neural network model;
obtain a second accuracy level regarding a result value output by inputting the evaluation data to the trained global neural network model; and
evaluate the trained global neural network model by comparing the first accuracy level with the second accuracy level.

3. The electronic apparatus as claimed in claim 2, wherein the at least one processor is further configured to, based on determining that the second accuracy level is higher than the first accuracy level, determine whether to transmit the information regarding the trained global neural network model to the server.

4. The electronic apparatus as claimed in claim 1, wherein the information regarding the global neural network model comprises version information corresponding to the global neural network model and address information indicating an address from which the global neural network model is downloadable; and
wherein the at least one processor is further configured to:
compare version information corresponding to a local neural network model stored in the electronic apparatus with the version information corresponding to the global neural network model; and
based on determining that a version of the global neural network model is higher than a version of the local neural network model, download the global neural network model using the communication interface based on the address information.

5. The electronic apparatus as claimed in claim 1, wherein the at least one processor is further configured to:
receive a version file comprising the information regarding the global neural network model and the information regarding the evaluation data from the server using the communication interface;
obtain address information regarding a data set pre-stored in the electronic apparatus; and
add the obtained address information regarding the data set to the version file.

6. The electronic apparatus as claimed in claim 5, wherein the at least one processor is further configured to:
update the version file to include parameter information regarding the trained global network model based on the result of the evaluating; and
control the communication interface to transmit the updated version file to the server.

7. The electronic apparatus as claimed in claim 6, wherein the at least one processor is further configured to control the communication interface to delete the address information regarding the data set from the updated version file before the updated version file is transmitted to the server.

8. The electronic apparatus as claimed in claim 1, wherein a new version of the global neural network model is generated by the server based on the information regarding the trained global neural network model received from the electronic apparatus.

9. The electronic apparatus as claimed in claim 1, wherein the at least one processor is further configured to:
perform Secured Sockets Layer/Transport Layer Security (SSL/TLS) encoding on the information regarding the trained global neural network model; and
control the communication interface to transmit the encoded trained global neural network model to the server.

10. The electronic apparatus as claimed in claim 1, wherein the at least one processor is further configured to store the trained global neural network model in the memory as a local neural network model.

11. A controlling method of an electronic apparatus, the method comprising:
receiving information regarding a global neural network model and information regarding evaluation data from a server;
obtaining a data set for training the global neural network model;
training the global neural network model based on the data set;
evaluating the trained global neural network model by inputting the evaluation data to the trained global neural network model; and
determining whether to transmit information regarding the trained global neural network model to the server based on a result of the evaluating.

12. The method as claimed in claim 11, wherein the evaluating comprises:
obtaining a first accuracy level regarding a result value output by inputting the evaluation data to the global neural network model;
obtaining a second accuracy level regarding a result value output by inputting the evaluation data to the trained global neural network model; and
evaluating the trained global neural network model by comparing the first accuracy level with the second accuracy level.

13. The method as claimed in claim 12, wherein the determining comprises:
based on determining that the second accuracy level is higher than the first accuracy level, determining whether to transmit the information regarding the trained global neural network model to the server.

14. The method as claimed in claim 11, wherein the information regarding the global neural network model comprises version information corresponding to the global neural network model and address information indicating an address from which the global neural network model is downloadable, and
wherein the controlling method comprises:
comparing version information corresponding to a local neural network model stored in the electronic apparatus with the version information corresponding to the global neural network model; and
based on determining that a version of the global neural network model is higher than a version of the local neural network model, downloading the global neural network model based on the address information.

15. The method as claimed in claim 11, wherein the receiving comprises:
receiving a version file comprising the information regarding the global neural network model and the information regarding the evaluation data from the server; and
wherein the obtaining comprises:
obtaining address information regarding a data set pre-stored in the electronic apparatus; and
adding the obtained address information regarding the data set to the version file.
